# Europäisches Patentamt
# European Patent Office
# Office européen des brevets

(11) Publication number: **0 104 257**
**B1**

(12) EUROPEAN PATENT SPECIFICATION

(45) Date of publication of patent specification: **30.04.86**

(21) Application number: **83900063.5**

(22) Date of filing: **20.12.82**

(86) International application number:
**PCT/JP82/00472**

(87) International publication number:
**WO 83/02270 07.07.83 Gazette 83/16**

(51) Int. Cl.⁴: **C 04 B 35/46,** H 01 B 3/12, H 01 G 4/12

(54) HIGH DIELECTRIC CONSTANT PORCELAIN COMPOSITION.

(30) Priority: **21.12.81 JP 206573/81**
**21.12.81 JP 206574/81**
**21.12.81 JP 206575/81**
**17.02.82 JP 24965/82**

(43) Date of publication of application:
**04.04.84 Bulletin 84/14**

(45) Publication of the grant of the patent:
**30.04.86 Bulletin 86/18**

(84) Designated Contracting States:
**DE GB NL**

(56) References cited:
**FR-A-1 592 107**
**GB-A- 755 860**
**JP-A-51 149 599**
**JP-A-52 072 499**
**JP-A-55 053 006**
**US-A-4 014 707**

**CHEMICAL ABSTRACTS, vol. 86, no. 16, April 1977, page 553, abstract no. 114464k, COLUMBUS, Ohio (US)**

(73) Proprietor: **Matsushita Electric Industrial Co., Ltd.**
**1006, Oaza Kadoma**
**Kadoma-shi Osaka-fu, 571 (JP)**

(72) Inventor: **ITAKURA, Gen**
**2-317, Makinokitamachi 5-chome**
**Hirakata-shi Osaka-fu 573 (JP)**
Inventor: **USHIJIMA, Tadayoshi**
**27-5, Asahi-cho Kadoma-shi**
**Osaka-fu 571 (JP)**
Inventor: **KUSAKABE, Kenji**
**13-5, Myokenzaka 6-chome Katano-shi**
**Osaka-fu 576 (JP)**
Inventor: **KURODA, Takayuki**
**4-5, Koshien 3-bancho Nishinomiya-shi**
**Hyogo-ken 663 (JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

0 104 257

(56) References cited:

CHEMICAL ABSTRACTS, vol. 86, no. 16, April
1977, page 553, abstract no. 114465m,
COLUMBUS, Ohio (US)

CHEMICAL ABSTRACTS, vol. 87, no. 26,
December 26, 1977, page 569, abstract no.
210240a, COLUMBUS, Ohio (US)

CHEMICAL ABSTRACTS, vol. 84, no. 8,
February 23, 1976, page 634, abstract no.
52944q, COLUMBUS, Ohio (US)

## Description

Technical field

The present invention relates to ceramic high dielectric composition to be used mainly as laminated ceramic capacitor.

Background art

Hitherto many proposals have been made on ceramic high dielectric compositions with barium titanate ($BaTiO_3$) as host material, and they have been used specially for disc type ceramic capacitors.

The barium titanate is a material having ferrodielectric characteristic, and its Curie point lies around 120°C. Demarcated by this 120°C, in the lower temperature side thereof it becomes tetragonal, and in the upper temperature side thereof it becomes cubic. And it is well known that in the tetragonal region it shows ferrodielectric characteristic and in the cubic region it shows paraelectric characteristic.

Since, ceramic of such sole barium titanate has a very large change of dielectric constant dependent on temperature and also has a large dielectric dissipation tan δ in a temperature range of about normal temperature, it is hardly used as capacitor independently; and hitherto devices are made to shift the Curie point to around the normal temperature and to decrease the temperature dependency by adding various additives. $CaTiO_3$, $BaZrO_3$, $SrTiO_3$, $BaSnO_3$ and etc. are known as representative of the additives. By adding these appropriately and by adjusting with a small amount composition, material having characteristics of X7R, Y5T, Y5V, Z4V and etc. of EIA (Electric Industries Association) standard are offered. The fact is that these materials have been hitherto utilized generally as ceramic capacitors of thick disc type, for instance having 0.5—1 mm thickness of element.

In FR—A—1 592 107 there are described and claimed such ceramic compositions suitable to prepare capacitors having X7R characteristics. In order to minimize variations of the dielectric constant with temperature a mixture of two types of compounds of the perovskite group is used, one component having a Curie point of about 110°C and the other compound having a Curie point in the range from about 20 to 25°C. A solid phase reaction is initiated between both compounds by heating it to a temperature determined by the respective solid phase diagram of the perovskites selected. This reaction may be accelerated by the addition of the oxides of Ta and/or Nb in an amount of up to 4 mole percent.

This teaching, however, does not enable the man skilled in the art to overcome the difficulties discussed below in respect of thin film material.

In these years, miniaturization of capacitors is progressing corresponding to miniaturization of various electronics-related components, and the most in laminated ceramic capacitors. The laminated layer ceramic capacitor is that in which ceramic dielectric body is made into thin film of around 25—100 μm and sandwiching comb type electrodes to form a multiple layer structure. And since a ratio of electrodes area to electrodes gap can be made very large, its capacitance per volume can be made as large as 100 times or larger in comparison with the ceramic disc type capacitor, and the same capacitance can be assured with as small volume as 1/10 or less, and therefore much miniaturization is easy.

When such ceramic dielectric thin film is used, however, it is the fact that conventional disc type ceramic composition can not be used as it is. That is, since a voltage per unit length is loaded 10 times or more than the conventional case, a material having small voltage-dependencies of ceramic dielectric constant and small dissipation factor have become to be needed. Besides, due to recent adoption of direct bonding system onto printed circuit board, such a strong material as is not destroyed by bending of the print circuit board is needed. Further, since in electronics tuner or the like using the laminated ceramic capacitors, the frequencies are shifting to higher band of high sensitivities, those having good high frequency characteristics become necessary also with regard to the laminated ceramic capacitors. Especially, those having characteristic of YD in JIS (Japanese Industrial) standard or characteristic of Y5T in EIA standard are requested by a large number in relation to electronic tuner, and those which have dielectric constant of 3000 or above and tan δ of 2.0% or lower and low equivalent series resistance at frequency band of 1—100 MHz are requested.

Disclosure of the invention

Accordingly, the aim and purpose of the present invention is to provide ceramic high dielectric composition with good high frequency characteristics, having dielectric constant of 3000 or above, small voltage dependency, large bending strength and good high frequency characteristics.

This object has been attained by providing a ceramic high dielectric composition having $BaTiO_3$ as host material with additions of $CaTiO_3$ and $Ta_2O_5$, characterized in that it comprises 1 to 5 weight parts of $CaTiO_3$ and 2 to 3 weight parts $Ta_2O_5$ per 100 weight parts $BaTiO_3$.

Brief explanation of the drawing

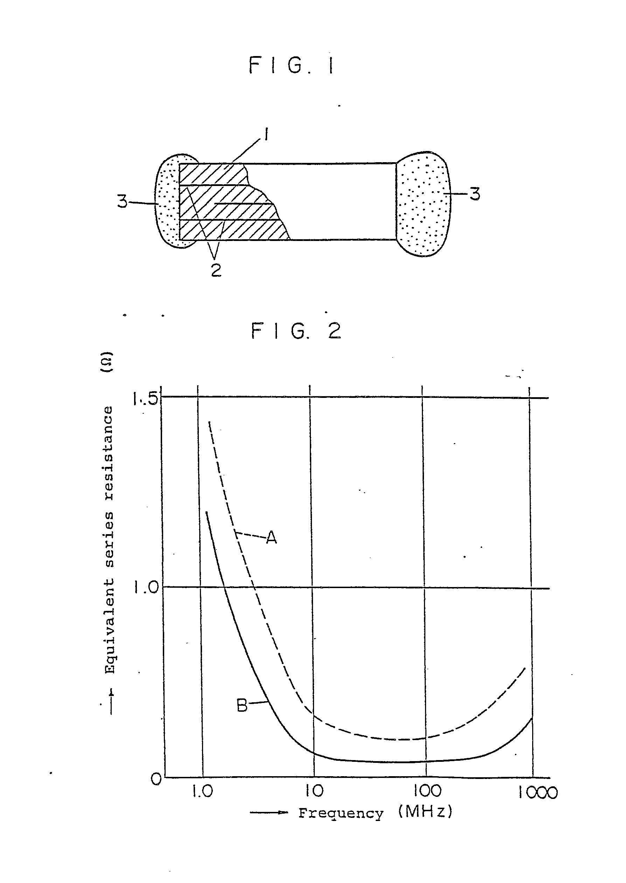

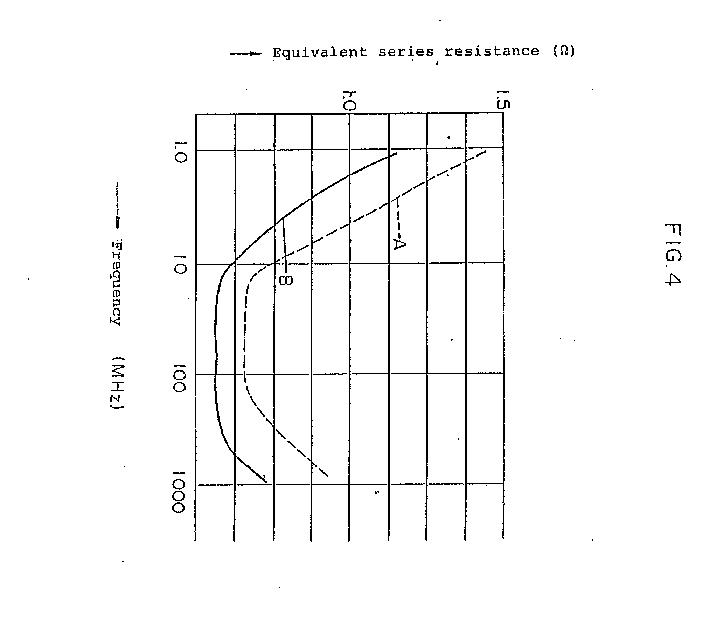

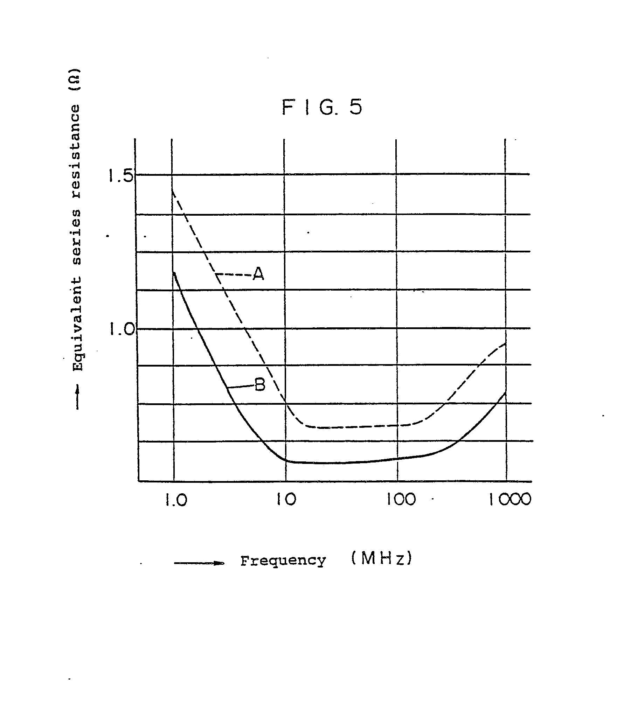

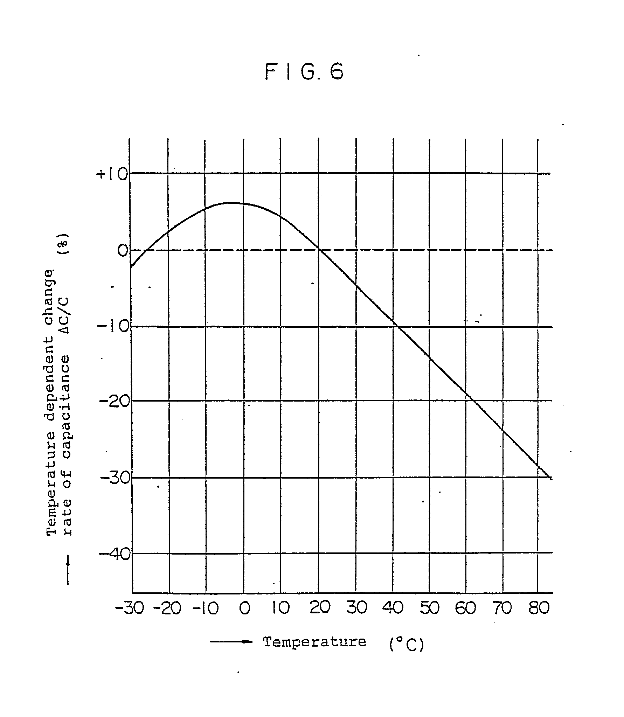

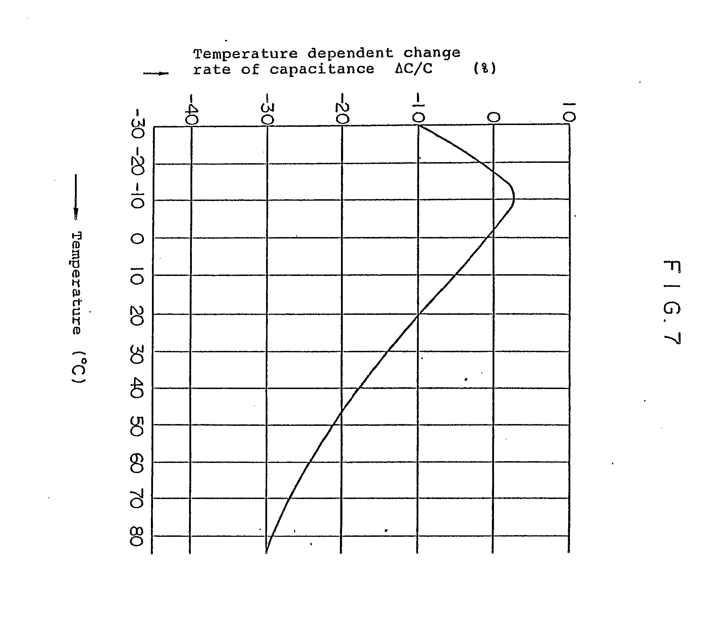

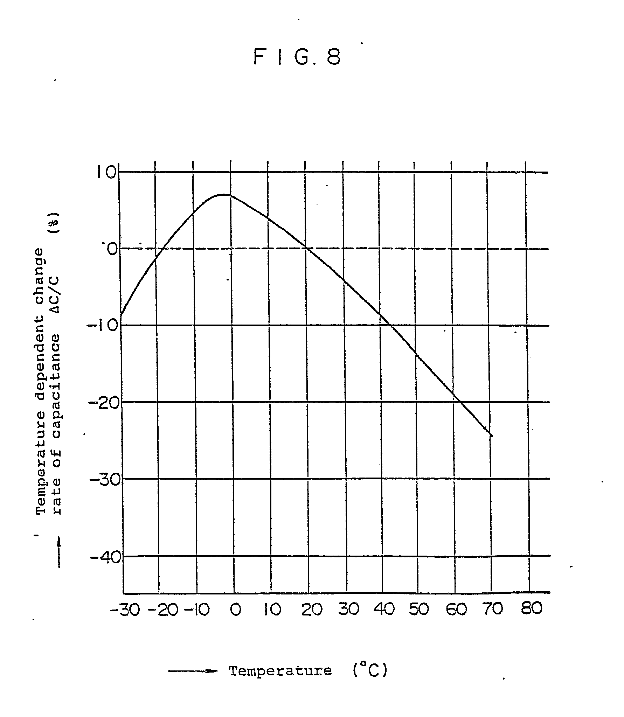

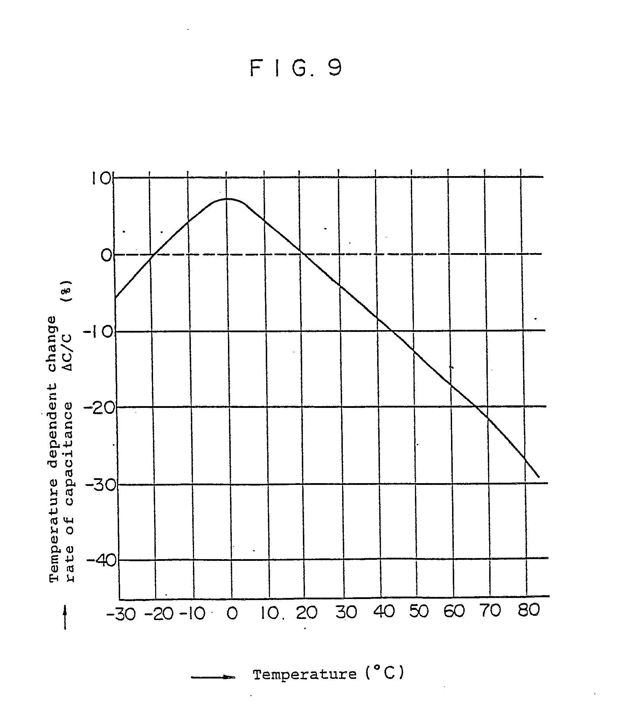

Fig. 1 is a partially sectional front view of a multiple layer ceramic capacitor trially made by using the composition of the present invention, Fig. 2—Fig. 5 are graphs showing frequency characteristics of equivalent series resistance of the laminated ceramic capacitor, and Fig. 6 to Fig. 9 are graphs showing temperature dependent change rates of the same.

3

The best mode for carrying out the invention

As a result of accumulation of various experiments, the inventors propose a ceramic high dielectric composition having barium titanate ($BaTiO_3$) as host material and additives of calcium titanate ($CaTiO_3$) and Tantalum oxide ($Ta_2O_5$), and depending on necessity small amount of additive(s), and thereby being of different group from the conventional compositions, and the present invention is hereafter elucidated with reference to embodiments.

Firstly, to 100 weight parts of $BaTiO_3$ (of 98% or higher purity), various additives are added and sufficiently mixed in a ball mill. The mixture is added with a small amount of 5% aqueous solution of PVA (polyvinylalcohol), then blended in mortar and filtrated through 30 mesh sieve to be granulated. The granulated powder is put in a die having inner diameter of 13 mm and molded in a shape of 13 mm diameter and 0.5 mm thickness by application of a pressure of 1 ton/cm². Also in the similar way, a mold of 4.7 mm×12.5 mm×1.5 mm size is formed by means of a rectangle die of 4.7 mm×12.5 mm size. These molds are sintered at 1250—1400°C for 1—5 hours. Then, on both face of the disc-shaped sintered body silver electrodes are provided. The below-mentioned Table 1 shows characteristics of the sintered body obtained by means of various compositions of $CaTiO_3$, $Ta_2O_5$, $MnO_2$, $CeO_2$ and $SiO_2$ for 100 weight parts of $BaTiO_3$. In the table, $\varepsilon_{25}$ shows dielectric constant obtained from capacitance measured at 25°C with 1 KHz AC 1V and tan δ measured under an AC voltage of effective value 50 V/mm. Further, TC shows change rate of capacitance measured at −30°C and +85°C taking 20°C as reference. And baking condition for the above case was 1350°C for 2 hours.

4

TABLE 1

| Sample No. | Additive composition (weight parts) | | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|---|
| | CaTiO$_3$ | Ta$_2$O$_5$ | MnO$_2$ | CeO$_2$ | SiO$_2$ | | | | | | −30°C | +85°C | |
| *1 | 0 | 2.5 | 0.2 | 0.2 | 0 | 2627 | 1.1 | $3\times10^{13}$ | 14 | 5.8 | −5.7 | −28.5 | 1030 |
| 2 | 2.0 | 2.0 | 0.2 | 0.2 | 0 | 3453 | 0.9 | $7\times10^{13}$ | 19 | 1.3 | −10.3 | −29.1 | 1140 |
| 3 | 2.5 | 3.0 | 0.2 | 0.2 | 0 | 3568 | 0.8 | $5\times10^{13}$ | 17 | 1.5 | −4.8 | −33.1 | 950 |
| 4 | 3.0 | 2.5 | 0.2 | 0.1 | 0 | 3673 | 1.1 | $4\times10^{13}$ | 25 | 1.1 | −2.5 | −31.6 | 980 |
| 5 | 3.0 | 2.0 | 0.2 | 0.1 | 0 | 3322 | 0.9 | $6\times10^{13}$ | 19 | 1.2 | −3.7 | −33.5 | 1100 |
| 6 | 3.0 | 2.0 | 0.2 | 0 | 0 | 3438 | 0.7 | $8\times10^{13}$ | 17 | 0.9 | −2.6 | −32.5 | 1280 |
| 7 | 5.0 | 4.0 | 0 | 0.3 | 0 | 3128 | 0.5 | $8\times10^{13}$ | 14 | 0.9 | −1.8 | −31.6 | 1000 |
| *8 | 7.0 | 2.5 | 0.2 | 0.2 | 0 | 2217 | 0.6 | $3\times10^{14}$ | 25 | 0.7 | +1.3 | −41.1 | 1020 |
| *9 | 3.0 | 5.0 | 0.2 | 0.2 | 0 | 2136 | 0.8 | $6\times10^{13}$ | 28 | 3.1 | +5.6 | −50.3 | 620 |
| 10 | 3.0 | 1.0 | 0.2 | 0.2 | 0 | 3683 | 1.1 | $5\times10^{13}$ | 16 | 2.0 | −11.7 | −26.6 | 1200 |
| 11 | 3.0 | 2.5 | 0.2 | 0.3 | 0 | 3432 | 0.7 | $8\times10^{13}$ | 16 | 1.4 | −8.4 | −27.8 | 690 |
| *12 | 3.0 | 2.5 | 0.2 | 0.5 | 0 | 3588 | 0.9 | $6\times10^{13}$ | 17 | 3.9 | −3.3 | −27.3 | 550 |
| *13 | 3.0 | 2.5 | 0.5 | 0.2 | 0 | 3716 | 1.6 | $1\times10^{17}$ | 13 | 4.9 | −5.5 | −30.8 | 990 |
| *14 | 3.0 | 2.5 | 0.8 | 0.2 | 0 | 3523 | 1.8 | $3\times10^{12}$ | 8 | 5.7 | −6.2 | −37.4 | 1050 |
| 15 | 3.0 | 2.5 | 0.2 | 0.2 | 0.5 | 3401 | 0.7 | $2\times10^{14}$ | 21 | 0.9 | −7.1 | −32.6 | 1420 |

TABLE 1 (Cont'd)

| Sample No. | Additive composition (weight parts) | | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|---|
| | CaTiO$_3$ | Ta$_2$O$_5$ | MnO$_2$ | CaO$_2$ | SiO$_2$ | | | | | | −30°C | +85°C | |
| 16 | 3.0 | 2.5 | 0 | 0 | 0.5 | 3267 | 0.9 | $3\times10^{14}$ | 24 | 0.7 | −5.9 | −28.9 | 1330 |
| *17 | 3.0 | 2.0 | 0 | 0 | 1.0 | 2908 | 2.3 | $2\times10^{13}$ | 13 | 3.8 | −7.1 | −31.8 | 480 |
| 18 | 3.0 | 2.0 | 0 | 0 | 0 | 3482 | 0.8 | $4\times10^{13}$ | 15 | 1.6 | −3.1 | −32.7 | 890 |
| 19 | 3.0 | 3.0 | 0 | 0 | 0 | 3269 | 0.5 | $6\times10^{13}$ | 16 | 1.1 | −4.9 | −30.8 | 830 |
| *20 | 0.5 | 2.5 | 0 | 0 | 0 | 3990 | 1.8 | $2\times10^{13}$ | 11 | 4.7 | −7.2 | −37.3 | 680 |
| 21 | 1.0 | 2.5 | 0 | 0 | 0 | 3720 | 1.1 | $7\times10^{13}$ | 19 | 1.9 | −5.7 | −33.0 | 850 |
| 22 | 3.0 | 2.5 | 0 | 0 | 0 | 3570 | 0.6 | $6\times10^{13}$ | 17 | 1.5 | −3.9 | −31.7 | 1030 |
| 23 | 5.0 | 2.5 | 0 | 0 | 0 | 3160 | 0.3 | $1\times10^{14}$ | 13 | 2.0 | −3.7 | −29.8 | 990 |
| *24 | 7.0 | 2.5 | 0 | 0 | 0 | 2340 | 0.5 | $2\times10^{14}$ | 9 | 1.7 | −0.6 | −42.3 | 960 |
| 25 | 1.0 | 2.5 | 0.2 | 0.3 | 0 | 3447 | 0.9 | $5\times10^{13}$ | 14 | 1.4 | −5.5 | −32.6 | 1210 |
| 26 | 5.0 | 3.0 | 0.2 | 0 | 0.5 | 3456 | 1.2 | $9\times10^{13}$ | 17 | 1.8 | −4.3 | −28.6 | 900 |
| *27 | 7.0 | 3.5 | 0.3 | 0 | 1.0 | 2050 | 0.4 | $1.1\times10^{14}$ | 12 | 1.4 | +1.0 | −39.3 | 810 |
| *28 | 3.0 | 1.0 | 0 | 0 | 0.5 | 3148 | 0.8 | $1\times10^{13}$ | 12 | 4.1 | −13.6 | −21.4 | 1090 |
| 29 | 3.0 | 2.0 | 0 | 0 | 0.5 | 3306 | 0.7 | $9\times10^{13}$ | 16 | 1.5 | −4.3 | −30.8 | 1120 |
| 30 | 3.0 | 3.0 | 0 | 0 | 0.5 | 3362 | 0.7 | $7\times10^{13}$ | 16 | 1.5 | −2.1 | −32.7 | 1160 |
| *31 | 3.0 | 4.0 | 0 | 0 | 0.5 | 3433 | 0.4 | $8\times10^{13}$ | 19 | 1.2 | +1.3 | −36.8 | 1240 |

* marked are comparison samples, which are outside the scope of the present invention. And the additive composition shows additive amount to 100 weight parts of BaTiO$_3$.

As is obvious from the Table 1, it is observed that the composition of the present invention is small in capacity change under AC voltage, and strong in bending strength. Since in the conventional composition with addition of $BaZrO_3$, $BaSnO_3$ or $SrTiO_3$ the AC voltage characteristic in tan δ value under 50 V/mm has been as high as about 3—7 and bending strength has been as low as 600—700 Kg/cm², they are considered a very much satisfactory characteristics.

Table 2 shows results of characteristics obtained by trially making laminated ceramic capacitor like the one as shown in Fig. 1 by using the composition of the sample No. 15 of the Table 1, and then examining the characteristics. Fig. 2 also shows characteristics of capacitors trially made by using conventional representative composition prepared by adding 3 weight parts of $BaZrO_3$, 0.4 weight part of $MgTiO_3$ and 0.2 weight parts of $MnO_2$ to 100 weight parts of $BaTiO_3$. In this case, dimension of the element is 3.07 mm×1.56 mm×0.56 mm. Incidentally in Fig. 1, numeral 1 designates ceramic dielectric body consisting of the compound of the sample No. 15, 2 palladium electrodes, and 3 electrodes (Ag electrodes). In the Table 2, C and tan δ are values measured with 1 KHz AC 1V, IRe is insulation resistivity measured with DC 50 V, and BDVe is rising breakdown voltage. The bending strength is the pressure immediately before destruction of element when the element is held with 2.5 mm span and center part of the element is pressed with a knife of 0.5 mm thick edge.

TABLE 2

| | C (pF) | tan δ (%) | IRe (Ω) | BDVe (kV) | TC (%) −30°C | TC (%) +85°C | Bending strength (Kg) |
|---|---|---|---|---|---|---|---|
| Composition of the present invention (No. 15) | 2460 | 0.8 | $1.3 \times 10^{13}$ | 2.5 | −1.6 | −30.9 | 3.2 |
| Conventional composition group with additive of $BaZrO_3$ | 2320 | 2.8 | $2 \times 10^{12}$ | 1.6 | +1.3 | −31.2 | 1.8 |

Fig. 2 shows frequency characteristic of equivalent series resistance of this case. It is clear that as compared with a characteristic A of the capacitor according to the conventional composition, a characteristic B of the capacitor of the present invention trially made by the sample No. 15 has very much good characteristic in high frequency range. Fig. 6 shows temperature change rate of the same capacitor trially made by the present invention.

Nextly, elucidation is made on a second embodiment of the present invention, wherein $BaTiO_3$ is host material and $CaTiO_3$, $Ta_2O_5$ and besides, gadolinium oxide ($Gd_2O_3$) are added to it. This is a ceramic high dielectric composition formed by adding 1—5 weight parts of $CaTiO_3$, 1—4 weight parts of $Ta_2O_5$ and 1—4 weight parts of $Gd_2O_3$ to 100 weight parts of $BaTiO_3$. In this case, 0.01—0.5% by weight of at least one kind of oxides of Mn, Cr, Fe, Ni and Co to the host material may be contained.

The below-mentioned Table 3 shows characteristics of sintered bodies obtained for the various additive compositions in the second embodiments; and the condition of preparation is quite the same as that of the embodiments of the above-mentioned first embodiment and the characteristics are measured in the same conditions.

7

TABLE 3

| Sample No. | Additive composition (weight parts) | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|
| | CaTiO₃ | Ta₂O₅ | Gd₂O₃ | Other | | | | | | −30°C | +85°C | |
| *1 | 0 | 2.5 | 2.0 | — | 3651 | 1.1 | $5 \times 10^{13}$ | 10 | 3.8 | −17 | −53 | 860 |
| 2 | 2.5 | 2.0 | 2.0 | — | 3359 | 0.7 | $7 \times 10^{13}$ | 15 | 1.3 | −10 | −25 | 1151 |
| 3 | 2.0 | 4.0 | 2.0 | — | 3963 | 1.3 | $9 \times 10^{13}$ | 17 | 2.0 | −10 | −30 | 975 |
| 4 | 2.0 | 4.0 | 4.0 | — | 4254 | 1.2 | $2 \times 10^{13}$ | 17 | 1.9 | −13 | −25 | 875 |
| 5 | 5.0 | 3.0 | 1.0 | — | 3005 | 1.3 | $1 \times 10^{13}$ | 19 | 2.0 | −6 | −35 | 950 |
| *6 | 7.0 | 2.5 | 2.0 | — | 1715 | 0.4 | $7 \times 10^{13}$ | 20 | 0.9 | 0 | −20 | 1040 |
| *7 | 3.0 | 0 | 4.0 | — | Not be sintered | | | | | | | |
| 8 | 2.0 | 1.0 | 4.0 | — | 3523 | 0.9 | $2 \times 10^{14}$ | 17 | 1.9 | −3 | −39 | 995 |
| 9 | 2.3 | 3.0 | 1.0 | — | 4051 | 0.8 | $3 \times 10^{13}$ | 20 | 1.6 | −5 | −20 | 900 |
| *10 | 2.5 | 2.5 | 0 | — | 4240 | 2.5 | $4 \times 10^{13}$ | 23 | 4.9 | −15 | −30 | 430 |
| *11 | 2.5 | 4.0 | 5.0 | — | 3561 | 1.2 | $9 \times 10^{13}$ | 17 | 2.0 | 50 | −5 | 540 |
| *12 | 2.5 | 7.0 | 2.5 | — | 1241 | 0.7 | $1 \times 10^{13}$ | 19 | 1.0 | 75 | 35 | 700 |
| 13 | 4.0 | 1.0 | 4.0 | — | 3334 | 1.4 | $3 \times 10^{13}$ | 16 | 2.2 | −12 | −36 | 1150 |
| 14 | 1.0 | 4.0 | 4.0 | — | 4500 | 1.3 | $8 \times 10^{13}$ | 17 | 2.1 | −15 | −21 | 980 |
| 15 | 2.0 | 2.0 | 2.0 | MnO₂ 0.2 | 3796 | 0.6 | $4 \times 10^{14}$ | 23 | 0.9 | −14 | −39 | 1150 |
| 16 | 2.0 | 2.0 | 2.0 | MnO₂ 0.5 | 3125 | 0.8 | $8 \times 10^{13}$ | 22 | 1.0 | −7 | −30 | 1240 |
| *17 | 2.0 | 2.0 | 2.0 | MnO₂ 0.7 | 1115 | 0.3 | $9 \times 10^{13}$ | 23 | 0.7 | −10 | −35 | 1200 |

0 104 257

TABLE 3 (Cont'd)

| Sample No. | Additive composition (weight parts) | | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|---|
| | CaTiO$_3$ | Ta$_2$O$_5$ | Gd$_2$O$_3$ | Other | | | | | | | −30°C | +85°C | |
| 18 | 2.0 | 2.0 | 2.0 | Cr$_2$O$_3$ | 0.1 | 3951 | 1.1 | $4\times10^{13}$ | 21 | 2.0 | −15 | −31 | 1090 |
| 19 | 2.0 | 2.0 | 2.0 | Cr$_2$O$_3$ | 0.3 | 3951 | 0.7 | $7\times10^{13}$ | 19 | 1.1 | −11 | −43 | 1040 |
| 20 | 2.0 | 2.0 | 2.0 | Cr$_2$O$_3$ | 0.5 | 3743 | 0.8 | $2\times10^{13}$ | 20 | 1.2 | −15 | −35 | 1090 |
| *21 | 2.0 | 2.0 | 2.0 | Cr$_2$O$_3$ | 0.7 | 1175 | 0.9 | $9\times10^{13}$ | 18 | 1.4 | −19 | −22 | 950 |
| 22 | 2.0 | 2.0 | 2.0 | Fe$_2$O$_3$ | 0.3 | 4333 | 1.2 | $1\times10^{13}$ | 16 | 1.9 | −25 | −39 | 950 |
| 23 | 2.0 | 2.0 | 2.0 | Fe$_2$O$_3$ | 0.5 | 3751 | 1.3 | $6\times10^{13}$ | 15 | 2.0 | −15 | −38 | 1040 |
| *24 | 2.0 | 2.0 | 2.0 | Fe$_2$O$_3$ | 0.7 | 3751 | 1.1 | $4\times10^{13}$ | 17 | 1.9 | −22 | −35 | 730 |
| 25 | 2.0 | 2.0 | 2.0 | NiO | 0.3 | 3591 | 0.9 | $5\times10^{13}$ | 22 | 1.5 | −23 | −33 | 950 |
| 26 | 2.0 | 2.0 | 2.0 | NiO | 0.5 | 3600 | 1.1 | $3\times10^{13}$ | 23 | 1.8 | −7 | −30 | 980 |
| *27 | 2.0 | 2.0 | 2.0 | NiO | 0.7 | 3951 | 2.5 | $2\times10^{13}$ | 19 | 4.6 | −20 | −45 | 1120 |
| 28 | 2.0 | 2.0 | 2.0 | CoO | 0.3 | 3541 | 1.3 | $9\times10^{13}$ | 17 | 2.2 | −15 | −25 | 1040 |
| 29 | 2.0 | 2.0 | 2.0 | CoO | 0.5 | 3325 | 1.0 | $4\times10^{13}$ | 18 | 1.4 | −15 | −38 | 1000 |
| *30 | 2.0 | 2.0 | 2.0 | CoO | 0.7 | 2743 | 1.8 | $1\times10^{13}$ | 9 | 3.5 | −5 | −75 | 690 |

* marked are comparison samples, which are outside the present invention. The additive compositions of CaTiO$_3$, Ta$_2$O$_5$ and Gd$_2$O$_3$ are shown by weight parts of the additives to 100 weight parts of BaTiO$_3$, and the others, MnO$_2$, Cr$_2$O$_3$ etc. are shown by added amount in weight % to host material.

Nextly, elucidation is made on a third embodiment of the present invention wherein $BaTiO_3$ is a host material and $CaTiO_3$, $Ta_2O_5$ and further neodium oxide ($Nd_2O_3$) are added to it, and a fourth embodiment of the present invention wherein $BaTiO_3$ is a host material and $CaTiO_3$, $Ta_2O_5$ and further lantan oxide ($La_2O_3$) are added to it. That is, these are a ceramic high dielectric composition formed by adding 1—5 weight parts of $CaTiO_3$, 1—4 weight parts of $Ta_2O_5$ and 1—4 weight parts of $Nd_2O_3$ to 100 weight parts of $BaTiO_3$, and a ceramic high dielectric composition formed by adding 1—5 weight parts of $CaTiO_3$, 1—4 weight parts of $Ta_2O_5$ and 1—4 weight parts of $La_2O_3$ to 100 weight parts of $BaTiO_3$. Also in these cases, 0.01—0.5% by weight of at least one kind of oxide of Mn, Cr, Fe, Ni and Co to the host material may be contained.

The below-mentioned Table 4 and Table 5 show characteristics of sintered bodies obtained for the various additive compositions in the third and fourth embodiments; and the condition is quite the same as that of the embodiment of the above-mentioned first embodiment and the characteristics are measured under the same conditions.

TABLE 4

| Sample No. | Additive composition (weight parts) | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|
| | CaTiO₃ | Ta₂O₅ | Nd₂O₃ | Other | | | | | | −30°C | +85°C | |
| *1 | 0 | 2.5 | 2.0 | — | 3795 | 1.0 | $5\times10^{13}$ | 10 | 3.3 | −10 | −59 | 930 |
| 2 | 2.5 | 2.0 | 2.0 | — | 3458 | 0.7 | $7\times10^{13}$ | 16 | 1.2 | −7 | −29 | 950 |
| 3 | 2.0 | 4.0 | 2.0 | — | 3750 | 0.8 | $6\times10^{13}$ | 15 | 1.3 | −6 | −29 | 950 |
| 4 | 2.0 | 4.0 | 4.0 | — | 4315 | 1.1 | $2\times10^{13}$ | 19 | 1.3 | −25 | −36 | 1050 |
| 5 | 5.0 | 3.0 | 1.0 | — | 3250 | 1.0 | $7\times10^{13}$ | 19 | 1.7 | −72 | −33 | 1020 |
| *6 | 7.0 | 2.5 | 2.0 | — | 2000 | 0.6 | $1\times10^{14}$ | 18 | 1.1 | −25 | −33 | 1140 |
| *7 | 3.0 | 0 | 4.0 | — | Not be sintered | | | | | | | |
| 8 | 2.0 | 1.0 | 4.0 | — | 3750 | 0.9 | $1.4\times10^{14}$ | 17 | 1.1 | −5 | −35 | 950 |
| 9 | 2.0 | 3.0 | 1.0 | — | 3841 | 0.7 | $7\times10^{13}$ | 19 | 1.7 | −22 | −32 | 1020 |
| *10 | 2.5 | 2.5 | 0 | — | 3594 | 1.2 | $4\times10^{13}$ | 20 | 1.9 | −8 | −40 | 1040 |
| *11 | 2.5 | 4.0 | 5.0 | — | 3951 | 1.1 | $3\times10^{13}$ | 15 | 3.4 | +53 | +5 | 550 |
| *12 | 2.5 | 7.0 | 2.5 | — | 1235 | 0.6 | $1\times10^{13}$ | 17 | 1.4 | +85 | +23 | 640 |
| 13 | 4.0 | 1.0 | 4.0 | — | 3674 | 0.7 | $9\times10^{13}$ | 14 | 1.4 | −13 | −33 | 1150 |
| 14 | 1.0 | 4.0 | 1.0 | — | 4325 | 0.9 | $7\times10^{13}$ | 18 | 1.2 | −7 | −43 | 1250 |
| 15 | 2.0 | 2.0 | 2.0 | MnO₂ 0.2 | 3895 | 0.8 | $8\times10^{13}$ | 22 | 0.9 | −8 | −25 | 1120 |
| 16 | 2.0 | 2.0 | 2.0 | MnO₂ 0.5 | 3334 | 0.7 | $7\times10^{13}$ | 21 | 0.8 | −5 | −33 | 750 |
| *17 | 2.0 | 2.0 | 2.0 | MnO₂ 0.7 | 1235 | 0.6 | $9\times10^{13}$ | 23 | 0.9 | −10 | −34 | 980 |

0 104 257

TABLE 4 (Cont'd)

| Sample No. | Additive composition (weight parts) | | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|---|
| | CaTiO₃ | Ta₂O₅ | Nd₂O₃ | Other | | | | | | | −30°C | +85°C | |
| 18 | 2.0 | 2.0 | 2.0 | Cr₂O₃ | 0.1 | 3965 | 1.0 | $4\times10^{13}$ | 22 | 1.7 | −13 | −25 | 1150 |
| 19 | 2.0 | 2.0 | 2.0 | Cr₂O₃ | 0.3 | 3951 | 0.7 | $5\times10^{13}$ | 15 | 1.2 | −15 | −36 | 1000 |
| 20 | 2.0 | 2.0 | 2.0 | Cr₂O₃ | 0.5 | 3454 | 0.9 | $7\times10^{13}$ | 16 | 1.3 | −13 | −29 | 950 |
| *21 | 2.0 | 2.0 | 2.0 | Cr₂O₃ | 0.7 | 1591 | 0.8 | $1\times10^{14}$ | 20 | 1.2 | −11 | −31 | 960 |
| 22 | 2.0 | 2.0 | 2.0 | Fe₂O₃ | 0.3 | 4051 | 1.0 | $9\times10^{13}$ | 18 | 1.6 | −22 | −36 | 1020 |
| 23 | 2.0 | 2.0 | 2.0 | Fe₂O₃ | 0.5 | 3850 | 1.0 | $8\times10^{13}$ | 17 | 1.7 | −20 | −31 | 950 |
| *24 | 2.0 | 2.0 | 2.0 | Fe₂O₃ | 0.7 | 3351 | 0.7 | $4\times10^{13}$ | 19 | 1.1 | −10 | −40 | 750 |
| 25 | 2.0 | 2.0 | 2.0 | NiO | 0.3 | 3431 | 0.4 | $7\times10^{13}$ | 22 | 0.9 | −18 | −35 | 1040 |
| 26 | 2.0 | 2.0 | 2.0 | NiO | 0.5 | 3651 | 0.8 | $1\times10^{13}$ | 17 | 1.3 | −14 | −30 | 970 |
| *27 | 2.0 | 2.0 | 2.0 | NiO | 0.7 | 3511 | 2.5 | $2\times10^{13}$ | 19 | 4.6 | −5 | −21 | 1120 |
| 28 | 2.0 | 2.0 | 2.0 | CoO | 0.3 | 3290 | 1.0 | $7\times10^{13}$ | 18 | 1.7 | −17 | −38 | 1050 |
| 29 | 2.0 | 2.0 | 2.0 | CoO | 0.5 | 3395 | 1.2 | $3\times10^{13}$ | 16 | 1.9 | −19 | −39 | 980 |
| *30 | 2.0 | 2.0 | 2.0 | CoO | 0.7 | 3433 | 1.5 | $1\times10^{13}$ | 12 | 2.0 | −15 | −56 | 750 |

* marked are comparison samples, which are outside the present invention. The additive compositions of CaTiO₃, Ta₂O₅ and Nd₂O₅ are shown by weight parts of the additives to 100 weight parts of BaTiO₃, and the others MnO₂, Cr₂O₃ etc. are shown by added amount in weight % to host material.

TABLE 5

| Sample No. | Additive composition (weight parts) | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|
| | CaTiO$_3$ | Ta$_2$O$_5$ | La$_2$O$_3$ | Other | | | | | | −30°C | +85°C | |
| *1 | 0 | 2.5 | 2.0 | — | 3493 | 0.97 | $4\times10^{13}$ | 10 | 3.5 | −15 | −52 | 950 |
| 2 | 2.5 | 2.0 | 2.0 | — | 3215 | 0.7 | $5\times10^{13}$ | 14 | 1.3 | −10 | −28.3 | 1050 |
| 3 | 2.0 | 4.0 | 2.0 | — | 3753 | 1.1 | $6\times10^{13}$ | 18 | 1.5 | −4.3 | −30.5 | 980 |
| 4 | 2.0 | 4.0 | 4.0 | — | 4023 | 1.2 | $5\times10^{13}$ | 17 | 1.7 | −15.2 | −26.4 | 850 |
| 5 | 5.0 | 3.0 | 1.0 | — | 3115 | 0.9 | $6\times10^{13}$ | 19 | 1.1 | −3.1 | −35.1 | 1040 |
| *6 | 7.0 | 2.5 | 2.0 | — | 2115 | 0.6 | $9\times10^{13}$ | 20 | 1.0 | −25.1 | −32.5 | 1020 |
| *7 | 3.0 | 0 | 4.0 | — | Not be sintered | | | | | | | |
| 8 | 2.0 | 1.0 | 4.0 | — | 3423 | 0.9 | $1.3\times10^{14}$ | 18 | 1.1 | −3.8 | −40 | 980 |
| 9 | 2.0 | 3.0 | 1.0 | — | 3951 | 0.7 | $4\times10^{13}$ | 19 | 1.7 | −15.3 | −29 | 970 |
| *10 | 2.5 | 2.5 | 0 | — | 4043 | 1.2 | $2\times10^{13}$ | 15 | 1.4 | −7.5 | −33.1 | 540 |
| *11 | 2.5 | 4.0 | 5.0 | — | 4004 | 1.1 | $4\times10^{13}$ | 11 | 2.5 | −47 | −3.5 | 750 |
| *12 | 2.5 | 7.0 | 2.5 | — | 1561 | 0.6 | $4\times10^{14}$ | 19 | 1.0 | −95 | −3 | 630 |
| 13 | 4.0 | 1.0 | 4.0 | — | 3523 | 0.7 | $3\times10^{13}$ | 14 | 1.2 | −8 | −36 | 1120 |
| 14 | 1.0 | 4.0 | 1.0 | — | 4231 | 0.9 | $5\times10^{13}$ | 20 | 1.4 | −15 | −40 | 1040 |
| 15 | 2.0 | 2.0 | 2.0 | MnO$_2$ 0.2 | 3151 | 0.7 | $7\times10^{13}$ | 21 | 0.9 | −8 | −25 | 1250 |
| 16 | 2.0 | 2.0 | 2.0 | MnO$_2$ 0.5 | 3050 | 0.6 | $4\times10^{13}$ | 20 | 0.8 | −7 | −29 | 1150 |
| *17 | 2.0 | 2.0 | 2.0 | MnO$_2$ 0.7 | 1464 | 0.4 | $9\times10^{13}$ | 23 | 0.7 | −7 | −29 | 1350 |

TABLE 5 (Cont'd)

| Sample No. | Additive composition (weight parts) | | | | | $\varepsilon_{25}$ | tan δ (%) | IR (Ω-cm) | BDV (kV/mm) | AC-V (%) | TC (%) | | Constant of bending strength (Kg/cm²) |
|---|---|---|---|---|---|---|---|---|---|---|---|---|---|
| | CaTiO₃ | Ta₂O₅ | La₂O₃ | Other | | | | | | | −30°C | +85°C | |
| 18 | 2.0 | 2.0 | 2.0 | Cr₂O₃ | 0.1 | 4035 | 1.0 | $3\times10^{13}$ | 22 | 1.2 | −10 | −31 | 1000 |
| 19 | 2.0 | 2.0 | 2.0 | Cr₂O₃ | 0.3 | 3454 | 0.7 | $4\times10^{13}$ | 18 | 1.1 | −20 | −40 | 1000 |
| 20 | 2.0 | 2.0 | 2.0 | Cr₂O₃ | 0.5 | 3254 | 0.8 | $6\times10^{13}$ | 18 | 1.1 | −18 | −35 | 1020 |
| *21 | 2.0 | 2.0 | 2.0 | Cr₂O₃ | 0.7 | 1451 | 0.4 | $9\times10^{13}$ | 23 | 1.2 | −11 | −31 | 1000 |
| 22 | 2.0 | 2.0 | 2.0 | Fe₂O₃ | 0.3 | 3951 | 1.1 | $9\times10^{13}$ | 17 | 2.0 | −22 | −39 | 950 |
| 23 | 2.0 | 2.0 | 2.0 | Fe₂O₃ | 0.5 | 3850 | 1.0 | $7\times10^{13}$ | 17 | 1.8 | −25 | −38 | 950 |
| *24 | 2.0 | 2.0 | 2.0 | Fe₂O₃ | 0.7 | 3743 | 0.9 | $4\times10^{13}$ | 18 | 1.7 | −23 | −37 | 750 |
| 25 | 2.0 | 2.0 | 2.0 | NiO | 0.3 | 3431 | 0.8 | $3\times10^{13}$ | 17 | 1.3 | −18 | −40 | 1050 |
| 26 | 2.0 | 2.0 | 2.0 | NiO | 0.5 | 3596 | 1.2 | $5\times10^{13}$ | 16 | 1.8 | −14 | −35 | 950 |
| *27 | 2.0 | 2.0 | 2.0 | NiO | 0.7 | 3500 | 2.0 | $6\times10^{13}$ | 18 | 4.0 | −7 | −30 | 980 |
| 28 | 2.0 | 2.0 | 2.0 | CoO | 0.3 | 3215 | 1.0 | $9\times10^{13}$ | 17 | 1.5 | −21 | −40 | 950 |
| 29 | 2.0 | 2.0 | 2.0 | CoO | 0.5 | 3115 | 1.2 | $4\times10^{13}$ | 15 | 1.7 | −15 | −42 | 950 |
| *30 | 2.0 | 2.0 | 2.0 | CoO | 0.7 | 3050 | 1.5 | $1\times10^{13}$ | 11 | 2.0 | −10 | −51 | 750 |

* marked are comparison samples, which are outside the present invention. The additive compositions of CaTiO₃, Ta₂O₅ and La₂O₃ are shown by weight parts of the additives to 100 weight parts of BaTiO₃, and the others MnO₂, Cr₂O₃ etc. are shown by added amount in weight % to host material.

As is obvious from the Table 3—Table 5, it is observed that also for the compositions of the second embodiments to fourth embodiments, like the first embodiment, the dielectric constant is large, capacity change depending on AC voltage is small and bending strength is great.

Hereupon, though in the second through fourth embodiments the only such cases have been illustrated that as shown in Table 3 to Table 5 as the additive composition one of $MnO_2$, $Cr_2O_3$, $Fe_2O_3$, NiO or CoO has been included to the host material, but the inventors confirmed that similar effect is obtainable even when two kinds or more of these oxides are combined and included. In that case, it is similar to the above-mentioned case that when the additive amount to the host material is included exceeding 0.5 weight % the characteristic of $\varepsilon_{25}$ is deteriorated. Also, the inventor confirmed that by inclusion of 0.01 weight % or more (0.5 weight % or smaller) of at least the kind of oxide of Mn, Cr, Fe, Ni and Co to the host material, the compositions of the above-mentioned second through fourth embodiments have the similar effect as the characteristics shown in the Table 3 through Table 5.

Also, compositions of the samples No. 15 of the Table 3, Table 4 and Table 5 are used and the above-mentioned laminated ceramic capacitors were trially made, and their characteristics were examined, and the results are shown on the below-mentioned Table 6. In this case the sizes of the element were similar to the embodiment of the first embodiment, and the characteristics were measured under the same conditions.

TABLE 6

| | C (pF) | tan δ (%) | IRe (Ω) | BDVe (kV) | TC (%) | | Bending strength (Kg) |
|---|---|---|---|---|---|---|---|
| | | | | | −30°C | +85°C | |
| Second embodiment (Sample No. 15 of Table 3) | 2580 | 0.7 | $1.3 \times 10^{13}$ | 3.2 | −10.5 | −29.8 | 3.5 |
| Third embodiment (Sample No. 15 of Table 4) | 2450 | 0.8 | $9 \times 10^{12}$ | 2.8 | −7.3 | −31.1 | 3.7 |
| Fourth embodiment (Sample No. 15 of Table 5) | 2200 | 0.7 | $9 \times 10^{12}$ | 2.6 | −5.0 | −30.1 | 3.6 |

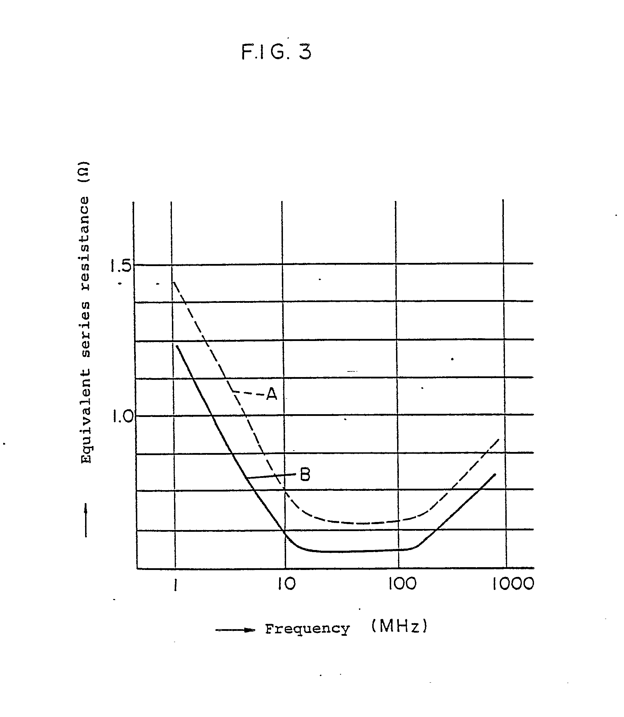

Fig. 3 through Fig. 5 show frequency characteristics of equivalent series resistance of these cases. It is apparent that, in comparison with the characteristic A of the above-mentioned composition (composition for the above-mentioned $BaZrO_3$ additive), the characteristics B of the capacitors trially made with the examples No. 15 of the second embodiment through fourth embodiment is very good in high frequency range like the first embodiment. Besides, Fig. 6 through Fig. 9 show temperature dependent change rates of the capacitance of capacitors trially made with the composition of Fig. 2 through Fig. 5.

Possibile utilization in industry

As has been explained above, according to the ceramic high dielectric composition of this invention, there are good characteristics when used as thin film type dielectric body such as laminated ceramic capacitor. That is, it has a composition to meet recent market needs in having high dielectric constant of 3000 or above, having small voltage-dependency, having strong bending strength and having small equivalent series resistance in high frequency, and has particularly high utility in the region of electronic tuner or the like.

**Claims**

1. Ceramic high dielectric composition having $BaTiO_3$ as host material with additions of $CaTiO_3$ and $Ta_2O_5$, characterized in that it comprises 1—5 weight parts of $CaTiO_3$ and 2—3 weight parts of $Ta_2O_5$ per 100 weight parts of $BaTiO_3$.

2. Ceramic high dielectric composition having $BaTiO_3$ as host material with additions of $CaTiO_3$ and $Ta_2O_5$, characterized in that it comprises 1—5 weight parts of $CaTiO_3$, 1—4 weight parts of $Ta_2O_5$, 0.2 weight parts or lower (excluding 0 parts) of $MnO_2$ and 0.3 weight parts or lower (excluding 0 parts) of $CeO_2$ per 100 weight parts of $BaTiO_3$.

3. Ceramic high dielectric composition having $BaTiO_3$ as host material with additions of $CaTiO_3$ and

15

Ta$_2$O$_5$, characterized in that it comprises 1—5 weight parts of CaTiO$_3$, 2—3 weight parts of Ta$_2$O$_5$, 0.2 weight parts or lower (excluding 0 parts) of MnO$_2$ and 0.5 weight parts or lower (excluding 0 parts) of SiO$_2$ per 100 weight parts of BaTiO$_3$.

4. Ceramic high dielectric composition having BaTiO$_3$ as host material with additions of CaTiO$_3$ and Ta$_2$O$_5$, characterized in that it comprises 1—5 weight parts of CaTiO$_3$, 1—4 weight parts of Ta$_2$O$_5$ and 1—4 weight parts of Gd$_2$O$_3$, Nd$_2$O$_3$ or La$_2$O$_3$ per 100 weight parts of BaTiO$_3$.

5. Ceramic high dielectric composition according to claim 4, characterized in that it comprises additionally 0.01—0.5 weight %, calculated on the host material, of at least one kind of oxides of Mn, Cr, Fe, Ni and Co.

**Patentansprüche**

1. Keramische Zusammensetzung mit hoher Dielektrizitätskonstante enthaltend BaTiO$_3$ als Grundmaterial mit Zusätzen von CaTiO$_3$ und Ta$_2$O$_5$, dadurch gekennzeichnet, daß sie 1 bis 5 Gewichtsteile CaTiO$_3$ und 2 bis 3 Gewichtsteile Ta$_2$O$_5$ pro 100 Gewichtsteile BaTiO$_3$ enthält.

2. Keramische Zusammensetzung mit hoher Dielektrizitätskonstante enthaltend BaTiO$_3$ als Grundmaterial mit Zusätzen von CaTiO$_3$ und Ta$_2$O$_5$, dadurch gekennzeichnet, daß sie 1 bis 5 Gewichtsteile CaTiO$_3$, 1 bis 4 Gewichtsteile Ta$_2$O$_5$, 0,2 Gewichtsteile oder weniger (ausgenommen 0) MnO$_2$ und 0,3 Gewichtsteile oder weniger (ausgenommen 0) CeO$_2$ pro 100 Gewichtsteile BaTiO$_3$ enthält.

3. Keramische Zusammensetzung mit hoher Dielektrizitätskonstante enthaltend BaTiO$_3$ als Grundmaterial mit Zusätzen von CaTiO$_3$ und Ta$_2$O$_5$, dadurch gekennzeichnet, daß sie 1 bis 5 Gewichtsteile CaTiO$_3$, 2 bis 3 Gewichtsteile Ta$_2$O$_5$, 0,2 Gewichtsteile oder weniger (ausgenommen 0) MnO$_2$ und 0,5 Gewichtsteile oder weniger (ausgenommen 0) SiO$_2$ pro 100 Gewichtsteile BaTiO$_3$ enthält.

4. Keramische Zusammensetzung mit hoher Dielektrizitätskonstante enthaltend BaTiO$_3$ als Grundmaterial mit Zusätzen von CaTiO$_3$ und Ta$_2$O$_5$, dadurch gekennzeichnet, daß sie 1 bis 5 Gewichtsteile CaTiO$_3$, 1 bis 4 Gewichtsteile Ta$_2$O$_5$ und 1 bis 4 Gewichtsteile Gd$_2$O$_3$, Nd$_2$O$_3$ oder La$_2$O$_3$ pro 100 Gewichtsteile BaTiO$_3$ enthält.

5. Keramische Zusammensetzung mit hoher Dielektrizitätskonstante nach Anspruch 4, dadurch gekennzeichnet, daß sie zusätzlich 0,01 bis 0,5 Gewichtsprozent, bezogen auf das Grundmaterial, mindestens einer Art von Oxiden von Mn, Cr, Fe, Ni und Co enthält.

**Revendications**

1. Composition céramique hautement diélectrique ayant BaTiO$_3$ comme matière hôte avec adjonctions de CaTiO$_3$ et Ta$_2$O$_5$, caractérisée en ce qu'elle comprend 1—5 parties, en poids, de CaTiO$_3$ et 2—3 parties, en poids, de Ta$_2$O$_5$, pour 100 parties, en poids, de BaTiO$_3$.

2. Composition céramique hautement diélectrique ayant BaTiO$_3$ comme matière hôte avec adjonctions de CaTiO$_3$ et Ta$_2$O$_5$, caractérisée en ce qu'elle comprend 1—5 parties, en poids, de CaTiO$_3$, 1—4 parties, en poids, de Ta$_2$O$_5$, 0,2 parties, en poids, ou moins (en excluant 0 parties) de MnO$_2$ et 0,3 parties, en poids, ou moins (en excluant 0 parties) de CeO$_2$, pour 100 parties, en poids, de BaTiO$_3$.

3. Composition céramique hautement diélectrique ayant BaTiO$_3$ comme matière hôte avec adjonctions de CaTiO$_3$ et Ta$_2$O$_5$, caractérisée en ce qu'elle comprend 1—5 parties, en poids, de CaTiO$_3$, 2—3 parties, en poids, de Ta$_2$O$_5$, 0,2 parties, en poids, ou moins (en excluant 0 parties) de MnO$_2$ et 0,5 parties, en poids, ou moins (en excluant 0 parties) de SiO$_2$, pour 100 parties, en poids, de BaTiO$_3$.

4. Composition céramique hautement diélectrique ayant BaTiO$_3$ comme matière hôte avec adjonctions de CaTiO$_3$ et Ta$_2$O$_5$, caractérisée en ce qu'elle comprend 1—5 parties, en poids, de CaTiO$_3$, 1—4 parties, en poids de Ta$_2$O$_5$ et 1—4 parties en poids de Gd$_2$O$_3$, Nd$_2$O$_3$ ou La$_2$O$_3$, pour 100 parties, en poids, de BaTiO$_3$.

5. Composition céramique hautement diélectrique selon la revendication 4, caractérisée en ce qu'elle comprend, en outre, 0,01—0,5%, en poids, calculé d'après la matière hôte, d'au moins une sorte d'oxyde choisie parmi les oxydes de Mn, Cr, Fe, Ni et Co.

FIG. 1

FIG. 2

F.I G. 3

Frequency (MHz)

FIG. 4

FIG. 5

Equivalent series resistance (Ω)

Frequency (MHz)

F I G. 6

0 104 257

F I G. 7

Temperature (°C)

6

F I G. 8

F I G. 9

Temperature dependent change rate of capacitance $\Delta C/C$ (%)

Temperature (°C)